(19) Europäisches Patentamt
European Patent Office
Office européen des brevets

(11) **EP 4 428 939 A1**

(12) **EUROPEAN PATENT APPLICATION**

(43) Date of publication:
**11.09.2024  Bulletin 2024/37**

(21) Application number: **24158899.5**

(22) Date of filing: **21.02.2024**

(51) International Patent Classification (IPC):
**H01M 4/13** (2010.01)     H01M 4/02 (2006.01)

(52) Cooperative Patent Classification (CPC):
**H01M 4/13;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.03.2023  JP 2023034561**

(71) Applicant: **Toyota Jidosha Kabushiki Kaisha
Toyota-shi, Aichi-Ken 471-8571 (JP)**

(72) Inventor: **ITO, Shinichiro
Toyota-shi, 471-8571 (JP)**

(74) Representative: **D Young & Co LLP
3 Noble Street
London EC2V 7BQ (GB)**

(54) **NEGATIVE ELECTRODE AND NON-AQUEOUS ELECTROLYTE SECONDARY BATTERY**

(57)     A negative electrode (10) comprising a negative electrode current collector (11) and a negative electrode active material layer (12) including a negative electrode active material, wherein the negative electrode active material layer (12) includes a first region (13) and a second region (14), a density of the second region (14) is at least 7% less than a density of the first region (13), and a volume ratio of the second region (14) to the negative electrode active material layer (12) is more than 7% and not more than 50%.

FIG.1

EP 4 428 939 A1

**Description**

CROSS REFERENCE TO RELATED APPLICATIONS

This nonprovisional application is based on Japanese Patent Application No. 2023-034561 filed on March 7, 2023, with the Japan Patent Office, the entire contents of which are hereby incorporated by reference.

BACKGROUND OF THE DISCLOSURE

Field

The present disclosure relates to a negative electrode and a non-aqueous electrolyte secondary battery.

Description of the Background Art

Japanese Patent Laying-Open No. 2022-27413 discloses a secondary battery having an increased coating weight of the negative electrode active material layer intended for higher capacity.

SUMMARY OF THE DISCLOSURE

There is a demand for further increase of the capacity of non-aqueous electrolyte secondary batteries. For increasing capacity, the coating weight of the electrode is increased, for example. However, when the coating weight of the electrode is increased, ion-diffusion pathways for lithium ions and the like included in the electrolyte solution may become longer and, thereby, input-output properties may be degraded.

An object of the present disclosure is to inhibit degradation of input-output properties.

A negative electrode comprising:

a negative electrode current collector; and
a negative electrode active material layer including a negative electrode active material, wherein
the negative electrode active material layer includes a first region and a second region,
a density of the second region is at least 7% less than a density of the first region, and
a volume ratio of the second region to the negative electrode active material layer is more than 7% and not more than 50%.

When a negative electrode active material layer is formed solely of a high density region, capacity can be increased but ion-diffusion pathways can become long, causing degradation of input-output properties. On the other hand, when a negative electrode active material layer is formed solely of a low density region, input-output properties can be enhanced but it can be difficult to enhance capacity.

The inventors of the present invention have found that in a negative electrode active material layer having two regions whose density is at least 7% different from each other and whose volume ratio between these regions is within a certain range, ion-diffusion pathways are short and, as a result, degradation of input-output properties is inhibited.

The negative electrode according to [1], wherein the second region is in grid form.

The negative electrode according to [1], wherein

the negative electrode active material layer includes a plurality of the second regions,
the second regions are columnar, and
a shortest distance between the plurality of the second regions is 50 $\mu$m or less.

The negative electrode according to any one of [1] to [3], wherein a coating weight of the negative electrode active material layer is 20 mg/cm$^2$ or more.

A non-aqueous electrolyte secondary battery comprising the negative electrode according to any one of [1] to [4].

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating an example of a negative electrode according to the present embodiment.
Fig. 2 is a schematic plan view illustrating the negative electrode of Fig. 1.
Fig. 3 is a conceptual view illustrating another example of the negative electrode according to the present embodiment.
Fig. 4 is a schematic plan view illustrating the negative electrode of Fig. 3.
Fig. 5 is a conceptual view illustrating an example of a non-aqueous electrolyte secondary battery according to the present embodiment.
Fig. 6 is a table showing a first battery configuration.
Fig. 7 is a table showing a second battery configuration.
Fig. 8 is a table showing a third battery configuration.
Fig. 9 is a table showing sample configurations of test batteries of Nos. 1 to 17, as well as evaluation results.
Fig. 10 is a graph showing the relationship between the density of the negative electrode active material layer of the test batteries of Nos. 1 to 17, and the CC charging ratio.
Fig. 11 is a graph showing the relationship between the volume ratio of the second region to the negative electrode active material layer of test batteries of Nos. 8 and 11 to 14, and the CC charging ratio.
Fig. 12 is a graph showing the relationship between the shortest distance between the plurality of the second regions of test batteries of Nos. 15 to 17, and the CC charging ratio.

DESCRIPTION OF THE PREFERRED EMBODIMENTS

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring.

"Copolymer" includes at least one selected from the group consisting of unspecified-type, statistical-type, random-type, alternating-type, periodic-type, block-type, and graft-type.

<<Negative Electrode>>

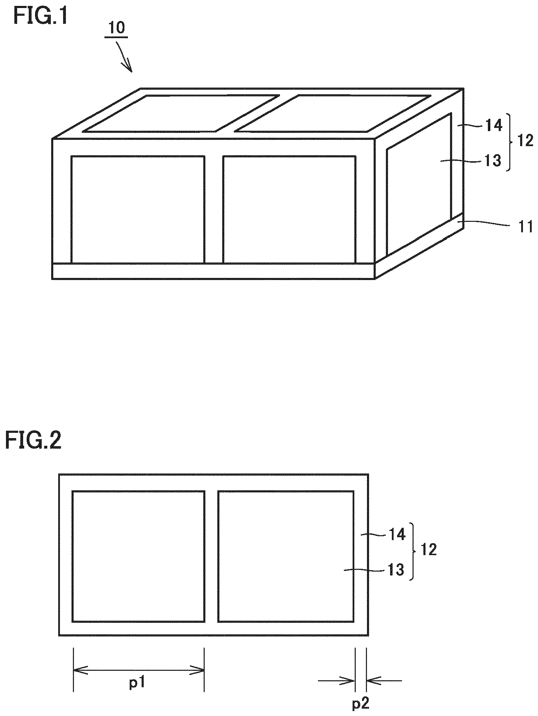

Each of Figs. 1 to 4 is a conceptual view or a schematic plan view illustrating an example of a negative electrode according to the present embodiment. Referring to Figs. 1 to 4, a negative electrode 10 includes a negative electrode current collector 11 and a negative electrode active material layer 12. Negative electrode active material layer 12 includes a first region 13 and a second region 14.

<<Negative Electrode Current Collector>>

Negative electrode current collector 11 is electrically conductive. Negative electrode current collector 11 may have a thickness from 5 to 50 $\mu$m, for example. Negative electrode current collector 11 may include a metal foil and/or the like, for example. Negative electrode current collector 11 may include at least one selected from the group consisting of Cu, Ni, Fe, Zn, Pb, Ag, and Au, for example. Negative electrode current collector 11 may include a Cu foil, a Cu alloy foil, and/or the like, for example.

<<Negative Electrode Active Material Layer>>

Negative electrode active material layer 12 may have a thickness from 10 to 1000 $\mu$m, or from 50 to 500 $\mu$m, or from 100 to 300 $\mu$m, for example. Negative electrode active material layer 12 includes a negative electrode active material. Negative electrode active material layer 12 may further include a conductive material, a binder, and the like, for example. Similarly, first region 13 and second region 14 described below may also include a negative electrode active material, and may also further include a conductive material, a binder, a thickener, and the like.

<Conductive Material>

The conductive material may form an electron conduction path inside negative electrode active material layer 12. The content of the conductive material may be, for example, from 0.1 to 10 parts by mass relative to 100 parts by mass of the negative electrode active material. The conductive material may include any component. The conductive material may include, for example, at least one selected from the group consisting of graphite, AB, Ketjenblack, VGCFs, CNTs, and GFs. The CNTs may include at least one selected from the group consisting of single-walled CNTs (SWCNTs) and multi-walled CNTs (MWCNTs).

<Binder>

The content of the binder may be, for example, from 0.1 to 10 parts by mass relative to 100 parts by mass of the negative electrode active material. The binder may include any component. The binder may include, for example, at least one selected from the group consisting of styrene-butadiene rubber (SBR), acrylate butadiene rubber (ABR), sodium alginate, carboxymethylcellulose (such as CMC-H, CMC-Na, CMC-Li, CMC-NH$_4$), polyacrylic acid (such as PAA-H, PAA-Na, PAA-Li), polyacrylonitrile (PAN), polyvinylidene difluoride (PVdF), polytetrafluoroethylene (PTFE), acrylic resin (acrylic acid ester copolymer), methacrylic resin (methacrylic acid ester copolymer), polyvinylpyrrolidone (PVP), polyvinyl alcohol (PVA), and derivatives of these. For example, the expression "CMC-Na" refers to a Na salt of CMC. For example, the expression "CMC-H" refers to an acid-type CMC. The same applies to "PAA-Na" and the like.

<Thickener>

The content of the thickener may be, for example, from 0.1 to 10 parts by mass relative to 100 parts by mass of the negative electrode active material. The thickener may include any component. The thickener may include carboxymethylcellulose (CMC), methylcellulose (MC), and the like, for example.

<Other Components>

Negative electrode active material layer 12 may further include an inorganic filler, an organic filler, a solid electrolyte, a surface modifier, a dispersant, a lubricant, a flame retardant, a protective agent, a flux, a coupling agent, an adsorbent, and/or the like, for example. The negative electrode active material layer may include a layered silicate (such as smectite, montmorillonite, bentonite, hectorite), an inorganic filler (such as solid alumina, hollow silica, boehmite), a polysiloxane compound, and/or the like, for example.

<Negative Electrode Active Material>

The negative electrode active material may include, for example, at least one selected from the group consisting of natural graphite, artificial graphite, soft carbon, hard carbon, silicon (Si), SiO, Li silicate, Si-based alloy, tin (Sn), SnO, Sn-based alloy, and $Li_4Ti_5O_{12}$.

<Carbon-Based Active Material>

"Graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The graphite may include a dopant. The dopant may include, for example, at least one selected from the group consisting of B, N, P, Li, and Ca. The amount thereof to be added in molar fraction may be from 0.01 to 5%, or from 0.1 to 3%, or from 0.1 to 1%, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of $Al(OH)_3$, $AlOOH$, $Al_2O_3$, $WO_3$, $Li_2CO_3$, $LiHCO_3$, and $Li_3PO_4$.

<Alloy-Based Active Material>

SiO may be represented by the following formula (A-1), for example.

$$SiO_x \qquad (A-1)$$

In the above formula, the relationship of $0<x<2$ is satisfied.

In the above formula (A-1), x may satisfy $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. The second negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be from 0.01 to 5%, or from 0.1 to 3%, or from 0.1 to 1% in molar fraction, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate and/or Na silicate may be formed. For example, boron oxide (such as $B_2O_3$, for example), yttrium oxide (such as $Y_2O_3$, for example), and/or the like may be added to SiO.

<Si-C composite material>

The negative electrode active material may include a composite material of the carbon-based active material (such as graphite) and the alloy-based active material (such as Si), for example. A composite material including Si and carbon may also be called "an Si-C composite material". For example, Si microparticles may be dispersed inside carbon particles. For example, Si microparticles may be dispersed inside graphite particles. For example, Li silicate particles may be covered with a carbon material (such as amorphous carbon). The Si-C composite material and graphite may be mixed together for use.

<Multi-Component System>

The negative electrode active material may include two or more components. The negative electrode active material may include the carbon-based active material (such as graphite) and the alloy-based active material (such as Si, SiO). The mixing ratio (mass ratio) of the carbon-based active material and the alloy-based active material may be "(carbon-based active material)/(alloy-based active material)=1/9 to 9/1", or "(carbon-based active material)/(alloy-based active material)=2/8 to 8/2", or "(carbon-based active material)/(alloy-based active material)=3/7 to 7/3", or "(carbon-based active material)/(alloy-based active material)=4/6 to 6/4", for example.

<Structure of Negative Electrode Active Material Layer>

Negative electrode active material layer 12 includes first region 13 and second region 14 the density of which is different from each other. Each of first region 13 and second region 14 extends contiguously from the surface of negative electrode current collector 11 to another surface that is opposite to negative electrode current collector 11.

At negative electrode active material layer 12, first region 13 and second region 14 are in contact with each other. The positional relationship between first region 13 and second region 14 is not particularly limited. As illustrated in Figs. 1 and 2, at negative electrode active material layer 12, second regions 14 may be in grid form in a plan view, for example. In other words, first regions 13 are separated from each other by second region 14. For example, in a plan view, second regions 14 may be in regular grid form, short grid form, triangular grid form, diagonal grid form, and/or the like.

When second regions 14 are in grid form, in a plan view, the aperture size ($\mu$m) ("p1" in Fig. 2) and the line size ($\mu$m) ("p2" in Fig. 2) of second regions 14 are not particularly limited, and may be adjusted so that the volume ratio between first region 13 and second region 14 described below falls within a certain range. For example, the aperture size may be 20 $\mu$m or more, or may be 30 $\mu$m or more, or may be 50 $\mu$m or less, or may be 40 $\mu$m or less. For example, the line size may be 5 $\mu$m or more, or may be 15 $\mu$m or more, or may be 25 $\mu$m or less, or may be 20 $\mu$m or less. The aperture size and the line size may be measured in an SEM image, for example.

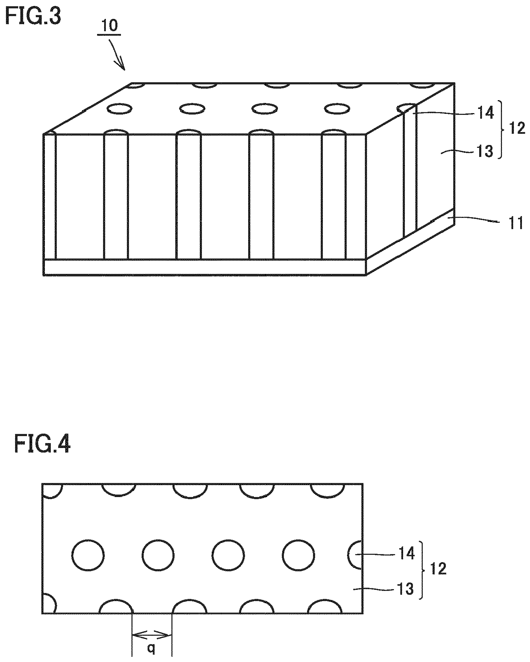

As illustrated in Figs. 3 and 4, at negative electrode active material layer 12, second region 14 may be columnar, for example. In other words, second regions 14 are separated from each other by first region 13. For example, second region 14 may be cylindrical or may be prismatic. For example, second region 14 may be a right column, or may be an oblique column. For example, second regions 14 may be randomly dispersed, or may be orderly positioned.

When second regions 14 are columnar, the shortest distance between second regions 14 ("q" in Fig. 4) is 50 $\mu$m or less. Herein, the "shortest distance" means the distance between particular second regions 14 that are closest to each other among the plurality of second regions 14 in negative electrode active material layer 12. When the shortest distance between second regions 14 is more than 50 $\mu$m, movement of ions across second regions 14 are inhibited, potentially causing degradation of input-output properties. Preferably, the shortest distance between second regions 14 is 40 $\mu$m or less. The shortest distance between second regions 14 is not particularly limited in terms of its lower limit as long as it is more than 0 $\mu$m, and, for example, it may be 5 $\mu$m or more or may be 10 $\mu$m or more.

The density (g/cm$^3$) of second region 14 is at least 7% less than the density (g/cm$^3$) of first region 13. When the density of second region 14 is at least 7% less than the density of first region 13, ions tend to be diffused in second region 14 which is a region with lower density. Due to this, ion-diffusion pathways in negative electrode active material layer 12 become shorter and, as a result, degradation of input-output properties is expected to be inhibited. The density of second region 14 may be at least 10%, or at least 15%, or at least 20%, less than the density of first region 13. Furthermore, from the viewpoint of ensuring input-output performance, the density of second region 14 may be at most 50%, or at most 30%, less than the density of first region 13.

The volume ratio of second region 14 to negative electrode active material layer 12 is more than 7% and not more than 50%. That is, the volume ratio of first region 13 to negative electrode active material layer 12 is not less than 50% and less than 93%. When the volume ratio of second region 14 to negative electrode active material layer 12 is 7% or less, ions tend not to be diffused easily, potentially causing degradation of input-output properties. When the volume ratio of second region 14 to negative electrode active material layer 12 is more than 50%, the amount of negative electrode active material that is not used during high-load charging is increased, potentially causing degradation of input-output properties. Preferably, the volume ratio of second region 14 to negative electrode active material layer 12 is from 10% to 40%.

Negative electrode active material layer 12 may include two or more negative electrode active materials. That is, first region 13 and second region 14 may include two or more negative electrode active materials. When each of first region 13 and second region 14 includes two or more negative electrode active materials, it is preferable that both regions include the same type of the negative electrode active material and, also, the content ratio (the weight ratio) of the same type of negative electrode active material included in the regions be the same between the two regions.

<Coating Weight>

The coating weight of negative electrode active material layer 12 is preferably 20 mg/cm$^2$ or more. This is because the effect of the present embodiment to inhibit degradation of input-output properties is exhibited better at a higher capacity. More preferably, the coating weight of negative electrode active material layer 12 is 25 mg/cm$^2$ or more. The coating weight according to the present example means a total of the coating weight of first region 13 and the coating weight of second region 14 each multiplied by the volume ratio of the region.

<<Method of Producing Negative Electrode>>

A method of producing a negative electrode according to the present embodiment includes, for example, a step of preparing a slurry including a negative electrode active material and a solvent (a preparation step), a step of applying the slurry to a negative electrode current collector to form a coating film (an application step), a step of drying the coating film (a drying step), and a step of compressing the coating film to form a negative electrode active material layer (a compression step). In the following, a description will be given of an example of the method of producing a negative electrode according to the present embodiment, but this is not limitative.

<<Production Example 1»

<Preparation Step>

In this step, a slurry including a negative electrode active material and a solvent is prepared. In this step, a conductive material, a binder, and the like may further be added. For example, a negative electrode active material, a conductive material, a binder, and a solvent are mixed to prepare a slurry.

Examples of the solvent include an aqueous solvent, an organic solvent, and the like. The aqueous solvent means water, or a mixed solvent including water and a polar organic solvent. For example, the dispersion medium may be selected to be suitable for the type of the negative electrode active material, the binder, and the like.

As the aqueous solvent, water may be preferably used because of its easy handling. Examples of the polar organic solvent that can be used in the mixed solvent include alcohols such as methanol, ethanol, and isopropyl alcohol, ketones such as acetone, ethers such as tetrahydrofuran, and the like. Examples of the organic solvent include N-methyl-2-pyrrolidone (NMP) and the like.

The slurry may have a solid concentration from 40% to 80%, for example. For mixing, any stirring apparatus, any mixing apparatus, and/or any dispersing apparatus may be used.

<Application Step>

In this step, the slurry is applied to a negative electrode current collector to form a coating film. In this Production Example, screen application is employed to apply the slurry to the negative electrode current collector. For application, any screen printing apparatus may be used.

The negative electrode current collector and a mesh are prepared. The mesh for use has a mesh-shaped structure, and is designed to be suitable for the desired volume ratio of the first region and the second region and the desired coating weight. The mesh is placed on the negative electrode current collector. After placement, the slurry is supplied to the mesh, and thereby the slurry filled in the mesh apertures is transferred to the surface of the negative electrode current collector. After transfer, the mesh is removed and the slurry flows into the mesh part, thereby a coating film is formed on the negative electrode current collector.

<Drying Step>

In this step, the coating film is dried to evaporate the solvent from the coating film. For drying, any drying apparatus may be used. For example, a hot air drying apparatus, a hot plate, an infrared drying apparatus, and/or the like may be used.

<Compression Step>

In this step, the coating film is compressed to form a negative electrode active material layer. For compression, any compressing apparatus may be used. The pressure may be adjusted to be suitable for the desired density of the first region and the second region, for example.

In this manner, a negative electrode is produced. In the negative electrode active material layer of the negative electrode thus produced in this manner, the second region may be formed in grid form.

<<Production Example 2»

This Production Example is different from Production Example 1 in that the former applies the slurry to the negative electrode current collector by gravure coating. In the following, the application step of this Production Example will be described. The preparation step, the drying step, and the compression step are the same as those in Production Example 1 and therefore description is omitted.

For application, any gravure printing apparatus may be used. The gravure printing apparatus is equipped with a pressure-bonding roller, a gravure cylinder, and a doctor blade. The gravure cylinder for use has protrusions and depressions on the surface, and is designed to be suitable for the desired volume ratio of the first region and the second region, the desired shortest distance between the plurality of the second regions, and the desired coating weight. As the gravure cylinder rotates, the surface becomes filled with the slurry. Part of the slurry present on the protruded portions on the surface is removed with the doctor blade, and thereby the slurry is left only in the depressed portions on the surface. The negative electrode current collector is fed, becomes sandwiched between the pressure-bonding roller and the gravure cylinder, and is pressure-bonded by the pressure-bonding roller, so that the slurry is transferred to the surface of the negative electrode current collector. After transfer, the slurry flows into the part of the negative electrode current collector to which no slurry is transferred, and thereby a coating film is formed.

Subsequently, in the same manner as in Production Example 1, the drying step and the compression step are carried out, and thereby a negative electrode is produced. In the negative electrode active material layer of the negative electrode thus produced in this manner, the second region may be formed in columnar form.

<<Non-Aqueous Electrolyte Secondary Battery>>

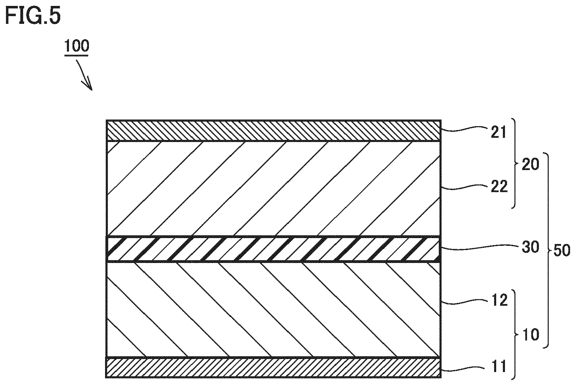

Fig. 5 is a conceptual view illustrating an example of a non-aqueous electrolyte secondary battery according to the present embodiment. A battery 100 includes a power generation element 50 and an electrolyte (not illustrated).

<Exterior Package>

Battery 100 may include an exterior package (not illustrated). The exterior package may accommodate power generation element 50 and the electrolyte. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of battery 100.

<Power Generation Element>

Power generation element 50 may also be called "an electrode group", "an electrode assembly", and the like. Power generation element 50 includes a positive electrode 20 and a negative electrode 10. Power generation element 50 may further include a separator 30. Separator 30 is interposed between positive electrode 20 and negative electrode 10. Power generation element 50 may have any configuration. For example, power generation element 50 may be a stack-type one. For example, positive electrode 20 and negative electrode 10 may be alternately stacked with separator 30 interposed between positive electrode 20 and negative electrode 10 to form power generation element 50. For example, power generation element 50 may be a wound-type one. For example, positive electrode 20 having a belt-like shape, separator 30 having a belt-like shape, and negative electrode 10 having a belt-like shape may be stacked to form a stack. The resulting stack may be wound spirally to form power generation element 50. After being wound, the wound power generation element 50 may be shaped into a flat form.

<Positive Electrode>

Positive electrode 20 may be in sheet form, for example. Positive electrode 20 includes a positive electrode current collector 21 and a positive electrode active material layer 22. Positive electrode current collector 21 is electrically conductive. Positive electrode current collector 21 supports positive electrode active material layer 22. Positive electrode current collector 21 may be in sheet form, for example. Positive electrode current collector 21 may have a thickness from 5 to 50 $\mu$m, for example. Positive electrode current collector 21 may include a metal foil, for example. Positive electrode current collector 21 may include at least one selected from the group consisting of Al, Mn, Ti, Fe, and Cr, for example. Positive electrode current collector 21 may include an Al foil, an Al alloy foil, a Ti foil, a stainless steel (SUS) foil, and/or the like, for example.

Between positive electrode current collector 21 and positive electrode active material layer 22, an intermediate layer (not illustrated) may be formed. The intermediate layer does not include a positive electrode active material. The intermediate layer may have a thickness from 0.1 to 5 $\mu$m, for example. The intermediate layer may include a conductive material, an insulation material, a binder, and/or the like, for example. The conductive material and the binder are described below. The insulation material may include alumina, boehmite, aluminum hydroxide, and/or the like, for example.

Positive electrode active material layer 22 is placed on the surface of positive electrode current collector 21. Positive electrode active material layer 22 may be placed on only one side of positive electrode current collector 21. Positive electrode active material layer 22 may be placed on both sides of positive electrode current collector 21. Positive electrode active material layer 22 may have a thickness of 10 $\mu$m or more, or may have a thickness of 50 $\mu$m or more, or may have a thickness of 80 $\mu$m or more, or may have a thickness of 100 $\mu$m or more, for example. It is conceivable that when positive electrode active material layer 22 is thick, more specifically when the thickness thereof is 80 $\mu$m or more, post-endurance retention is enhanced even more. Positive electrode active material layer 22 may have a thickness of 1000 $\mu$m or less, or may have a thickness of 500 $\mu$m or less, or may have a thickness of 300 $\mu$m or less. Positive

electrode active material layer 22 includes a positive electrode active material. Positive electrode active material layer 22 may further include a conductive material, a binder, and the like, for example.

<<Conductive Material>>

The conductive material may form an electron conduction path inside positive electrode active material layer 22. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, acetylene black (AB), Ketjenblack (registered trademark), vapor grown carbon fibers (VGCFs), carbon nanotubes (CNTs), and graphene flakes (GFs).

<<Binder>>

The binder is capable of fixing positive electrode active material layer 22 to positive electrode current collector 21. The amount of the binder to be used may be, for example, from 0.1 to 10 parts by mass relative to 100 parts by mass of the positive electrode active material. The binder may include any component. The binder may include, for example, at least one selected from the group consisting of polyvinylidene difluoride (PVdF), vinylidene difluoride-hexafluoropropylene copolymer (PVdF-HFP), tetrafluoroethylene (PTFE), CMC, PAA, polyvinyl alcohol (PVA), polyvinylpyrrolidone (PVP), polyoxyethylene alkyl ether, and derivatives of these.

<<Other Components>>

Positive electrode active material layer 22 may further include an inorganic filler, an organic filler, a solid electrolyte, a surface modifier, a lubricant, a flame retardant, a protective agent, a flux, a coupling agent, an adsorbent, and/or the like, for example. Positive electrode active material layer 22 may include polyoxyethylene allylphenyl ether phosphate, zeolite, a silane coupling agent, $MoS_2$, $WO_3$, and/or the like, for example.

<Positive Electrode Active Material>

The positive electrode active material may be in particle form, for example. The positive electrode active material may have a D50 from 1 to 30 $\mu$m, or from 10 to 20 $\mu$m, or from 1 to 10 $\mu$m, for example. "D50" refers to a particle size in volume-based particle size distribution at which the cumulative frequency accumulated from the small particle size side reaches 50%. D50 may be measured by laser diffraction. The sample to be measured is powder.

The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

<Transition Metal Oxide: Space Group R-3m>

The transition metal oxide may have any crystal structure. For example, the transition metal oxide may include a crystal structure that belongs to a space group R-3m and/or the like. For example, a compound represented by the general formula "LiMO$_2$" may have a crystal structure that belongs to a space group R-3m. The transition metal oxide may be represented by the following formula (B-1), for example.

$$Li_{1-a}Ni_xM_{1-x}O_2 \qquad (B-1)$$

In the above formula, the relationships of $-0.5 \leq a \leq 0.5$, $0 \leq x \leq 1$ are satisfied.
M may include, for example, at least one selected from the group consisting of Co, Mn, and Al.
In the above formula (B-1), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.
The transition metal oxide may include, for example, at least one selected from the group consisting of LiCoO$_2$, LiMnO$_2$, LiNi$_{0.9}$Co$_{0.1}$O$_2$, LiNi$_{0.9}$Mn$_{0.1}$O$_2$, and LiNiO$_2$.

<NCM>

The transition metal oxide may be represented by the following formula (B-2), for example. A compound represented by the following formula (B-2) may also be called "NCM".

$$Li_{1-a}Ni_xCo_yMn_zO_2 \qquad (B-2)$$

In the above formula, the relationships of $-0.5 \leq a \leq 0.5$, $0 < x < 1$, $0 < y < 1$, $0 < z < 1$, $x+y+z=1$ are satisfied.

In the above formula (B-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (B-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (B-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z \leq 1$, for example.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

<NCA>

The transition metal oxide may be represented by the following formula (B-3), for example. A compound represented by the following formula (B-3) may also be called "NCA".

$$Li_{1-a}Ni_xCo_yAl_zO_2 \qquad (B-3)$$

In the above formula, the relationships of $-0.5 \leq a \leq 0.5$, $0 < x < 1$, $0 < y < 1$, $0 < z < 1$, $x+y+z=1$ are satisfied.

In the above formula (B-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (B-3), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (B-3), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

<Multi-Component System>

The positive electrode active material may include two or more NCMs and/or the like, for example. The positive electrode active material may include NCM $(0.6 \leq x)$ and NCM $(x < 0.6)$, for example. "NCM $(0.6 \leq x)$" refers to a compound in which x (Ni ratio) in the above formula (B-2) is 0.6 or more. NCM $(0.6 \leq x)$ may also be called "a high-nickel material", for example. NCM $(0.6 \leq x)$ includes $LiNi_{0.8}Co_{0.1}Mn_{0.1}O_2$ and/or the like, for example. "NCM$(x < 0.6)$" refers to a compound in which x (Ni ratio) in the above formula (B-2) is less than 0.6. NCM

$(x < 0.6)$ includes $LiNi_{1/3}Co_{1/3}Mn_{1/3}O_2$ and/or the like, for example. The mixing ratio (mass ratio) between NCM $(0.6 \leq x)$ and NCM $(x < 0.6)$ may be "NCM $(0.6 \leq x)$/NCM $(x < 0.6)=9/1$ to $1/9$", or "NCM $(0.6 \leq x)$/NCM $(x < 0.6)=9/1$ to $4/6$", or "NCM $(0.6 \leq x)$/NCM $(x < 0.6)=9/1$ to $3/7$", for example.

The positive electrode active material may include NCA and NCM, for example. The mixing ratio (mass ratio) between NCA and NCM may be "NCA/NCM=$9/1$ to $1/9$", "NCA/NCM=$9/1$ to $4/6$", or "NCA/NCM=$9/1$ to $3/7$", for example. Between NCA and NCM, the Ni ratio may be the same or may be different. The Ni ratio of NCA may be more than the Ni ratio of NCM. The Ni ratio of NCA may be less than the Ni ratio of NCM.

<Transition Metal Oxide: Space Group C2/m>

The transition metal oxide may include a crystal structure that belongs to a space group C2/m and/or the like, for example. The transition metal oxide may be represented by the following formula (B-4), for example.

$$Li_2MO_3 \qquad (B-4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by the following formula (B-5), for example.

$$LiMn_{2-x}M_xO_4 \qquad (B-5)$$

In the above formula, the relationship of $0 \leq x \leq 2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2/LiM_2O_4$=9/1 to 9/1", or "$LiMO_2/LiM_2O_4$=9/1 to 5/5", or "$LiMO_2/LiM_2O_4$=9/1 to 7/3", for example.

<Polyanion Compound>

The polyanion compound may include a phosphoric acid salt (such as $LiFePO_4$ for example), a silicic acid salt, a boric acid salt, and/or the like, for example. The polyanion compound may be represented by the following formulae (B-6) to (B-9), for example.

$$LiMPO_4 \qquad (B-6)$$

$$Li_{2-X}MPO_4F \qquad (B-7)$$

$$Li_2MSiO_4 \qquad (B-8)$$

$$LiMBO_3 \qquad (B-9)$$

In the above formulae (B-6) to (B-9), M may include, for example, at least one selected from the group consisting of Fe, Mn, and Co. In the above formula (B-7), the relationship of $0 \leq x \leq 2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", or "$LiMO_2$/(polyanion compound) =9/1 to 5/5", or "$LiMO_2$/(polyanion compound) =9/1 to 7/3 ", for example.

<Dopant>

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

<Surface Covering>

Positive electrode 20 may include a composite particle. The composite particle includes a core particle and a covering layer. The core particle includes a positive electrode active material. The covering layer covers at least part of the surface of the core particle. The covering layer may have a thickness from 1 to 3000 nm, or from 5 to 2000 nm, or from 10 to 1000 nm, or from 10 to 100 nm, or from 10 to 50 nm, for example. The thickness of the covering layer may be measured in an SEM image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the covering layer is measured in twenty fields of view. The arithmetic mean of a total of these 200 thickness measurements is used.

The ratio of the part of the surface of the core particle covered by the covering layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (F-2), the covering rate is determined.

$$\theta = \{I_1 / (I_0 + I_1)\} \times 100 \qquad (F\text{-}2)$$

$\theta$: Covering rate [%]
$I_0$: Ratio of element attributable to core particle
$I_1$: Ratio of element attributable to covering layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the covering layer includes P and B, $I_1$ represents the total ratio of the elements "P, B".

The covering layer may include any component. The covering layer may include an elementary substance, organic matter, an inorganic acid salt, an organic acid salt, a hydroxide, an oxide, a carbide, a nitride, a sulfide, a halide, and/or the like, for example. The covering layer may include, for example, at least one selected from the group consisting of B, Al, W, Zr, Ti, Co, F, lithium compound (such as $Li_2CO_3$, $LiHCO_3$, $LiOH$, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for example), polyacrylic acid salt (such as Li salt, Na salt, $NH_4$ salt), acetic acid salt (such as Li salt, for example), CMC (such as CMC-Na, CMC-Li, CMC-$NH_4$), $LiNbO_3$, $Li_2TiO_3$, and Li-containing halide (such as $LiAlCl_4$, $LiTiAlF_6$, $LiYBr_6$, $LiYCl_6$, for example).

<Hollow Particles, Solid Particles>

"Hollow particle" refers to a secondary particle in which, in a cross-sectional image thereof, the proportion of the area of the central cavity is 30% or more of the entire cross-sectional area of the particle. The proportion of the cavity in a hollow particle may be 40% or more, or 50% or more, or 60% or more, for example. "Solid particle" refers to a secondary particle in which, in a cross-sectional image of the particle, the proportion of the area of the central cavity is less than 30% of the entire cross-sectional area of the particle. The proportion of the cavity in a solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1 ", or "(hollow particles)/(solid particles)=2/8 to 8/2", or "(hollow particles)/(solid particles)=3/7 to 7/3", or "(hollow particles)/(solid particles)=4/6 to 6/4", for example.

<Large Particles, Small Particles>

"Electrode active material" collectively refers to a positive electrode active material and a negative electrode active material. The electrode active material may have a unimodal particle size distribution (based on the number), for example. The electrode active material may have a multimodal particle size distribution, for example. The electrode active material may have a bimodal particle size distribution, for example. That is, the electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles (Ss) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. "D50" refers to a particle size in volume-based particle size distribution at which the cumulative frequency accumulated from the side of small particle sizes reaches 50%. D50 may be measured by laser diffraction. The sample to be measured is powder. For example, the large particles may have a D50 from 8 to 20 $\mu$m, or from 8 to 15 $\mu$m.

For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6 \leq x$) and the small particles may be NCM ($x < 0.6$).

<Separator>

Separator 30 is capable of separating positive electrode 20 from negative electrode 10. Separator 30 is electrically insulating. Separator 30 may include, for example, at least one selected from the group consisting of a resin film, an inorganic particle layer, and an organic particle layer. Separator 30 may include a resin film and an inorganic particle layer, for example.

<<Resin Film>>

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows the electrolyte to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a polyurethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

<<Inorganic Particle Layer>>

The inorganic particle layer may be formed on the surface of the resin film. The inorganic particle layer may be formed on only one side of the resin film, or may be formed on both sides of the resin film. The inorganic particle layer may be formed on the side facing positive electrode 20, or may be formed on the side facing negative electrode 10. The inorganic particle layer may be formed on the surface of positive electrode 20, or may be formed on the surface of negative electrode 10.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

<<Organic Particle Layer>>

Separator 30 may include an organic particle layer, for example. Separator 30 may include an organic particle layer instead of the resin film, for example. Separator 30 may include an organic particle layer instead of the inorganic particle layer, for example. Separator 30 may include both the resin film and an organic particle layer. Separator 30 may include both the inorganic particle layer and an organic particle layer. Separator 30 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 30 may include a mixed layer, for example. The mixed layer includes both inorganic particles and organic particles.

<Electrolyte>

The electrolyte dissolves Li ions in it. The electrolyte may be a liquid electrolyte, or may be a gelled electrolyte. The liquid electrolyte may include an electrolyte solution, for example. The electrolyte solution includes a solvent and a solute.

<<Solvent>>

<Ether-Based Solvent>

The electrolyte solution may include an ether-based solvent and/or the like, for example. The solvent may include hydrofluoroether (HFE) and/or the like, for example. HFE may include, for example, at least one selected from the group consisting of a difluoromethyl group, a 2,2-difluoroethyl group, a 2,2,2-trifluoroethyl group, a 1,1,2,2-tetrafluoroethyl group, a 2,2,3,3,3-pentafluoropropyl group, a 2,2,3,3-tetrafluoropropyl group, a 1,1,1,3,3,3-hexafluoroisopropyl group, a 1,1,2,3,3,3-hexafluoropropyl group, a 2,2,3,3,4,4,4-heptafluorobutyl group, a 2,2,3,3,4,4-hexafluorobutyl group, and a 2,2,3,3,4,4,5,5-octafluoropentyl group.

The solvent may also include an ether other than HFE (the ether may also be called "a second ether" hereinafter). The second ether may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), ethylglyme, triglyme, tetraglyme, and derivatives of these. For example, the solvent may include the second ether (such as DME) in a volume fraction from 1 to 50%, with the remainder being made up of HFE. For example, the solvent may include the second ether in a volume fraction from 10 to 40%, with the remainder being made up of HFE.

<Carbonate-Based Solvent>

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (C-1), for example.

$$V_{EC}+V_{FEC}+V_{EMC}+V_{DMC}+V_{DEC}=10 \qquad (C\text{-}1)$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above equation (C-1),
the relationship of $1 \leq V_{EC} \leq 2$ or $2 \leq V_{EC} \leq 3$ may be satisfied, for example.

The relationship of $1 \leq V_{FEC} \leq 2$ or $2 \leq V_{FEC} \leq 4$ may be satisfied, for example.

The relationship of $3 \leq V_{EMC} \leq 4$ or $6 \leq V_{EMC} \leq 8$ may be satisfied, for example.

The relationship of $3 \leq V_{DMC} \leq 4$ or $6 \leq V_{DMC} \leq 8$ may be satisfied, for example.

The relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

<Additive>

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

<<Ionic Liquid>>

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

«Gelled Electrolyte»

The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), and derivatives of these.

<Battery Configuration>

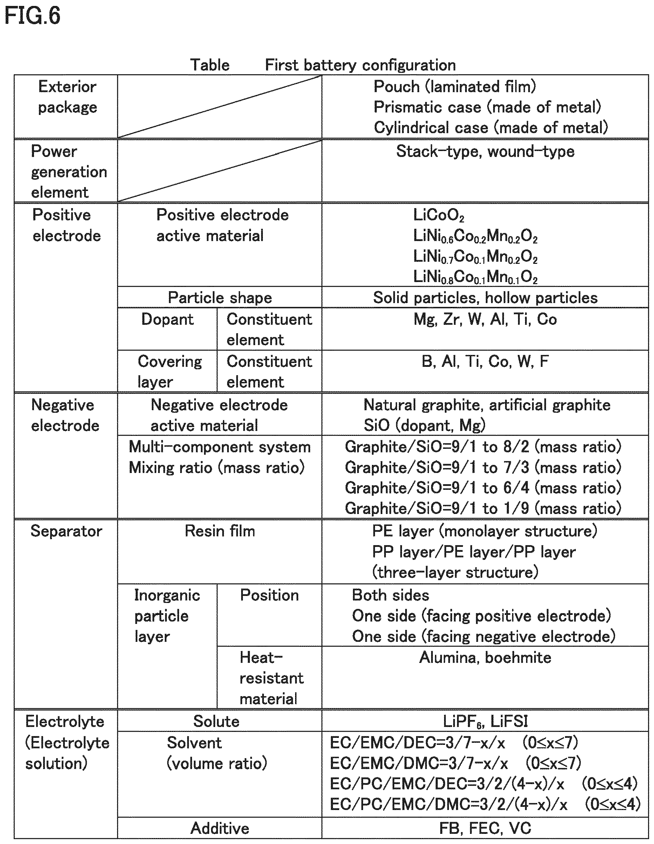

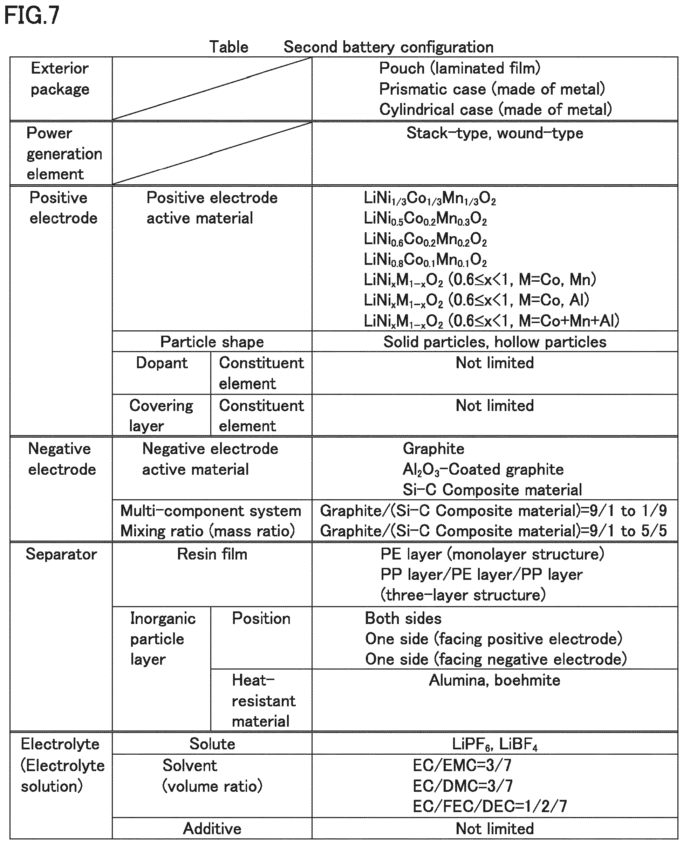

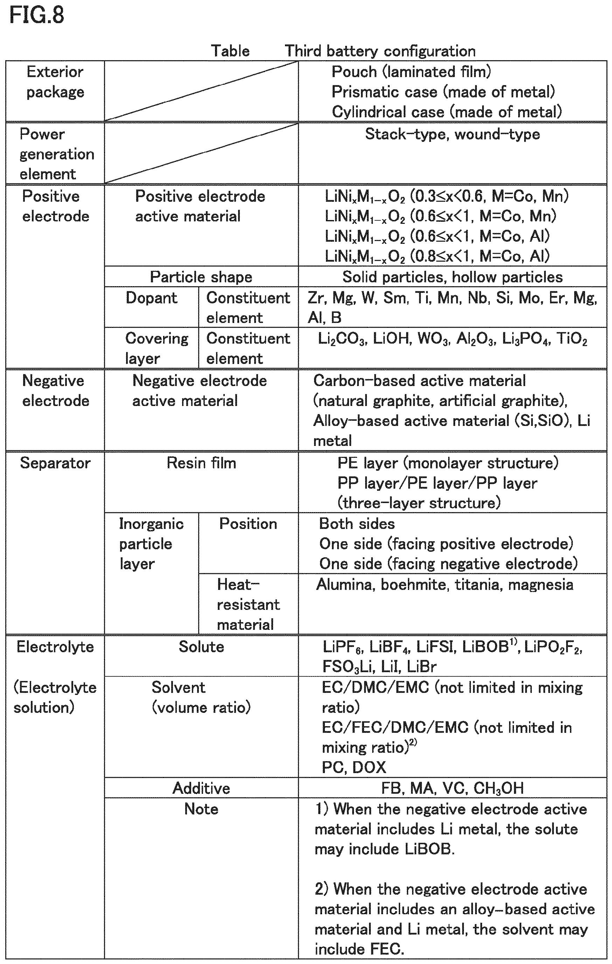

Fig. 6 is a table showing a first battery configuration. Fig. 7 is a table showing a second battery configuration. Fig. 8 is a table showing a third battery configuration. In each table, when a plurality of materials are described in a single cell, this description is intended to mean one of them as well as a combination of them. For example, when materials "$\alpha$, $\beta$, $\gamma$" are described in a single cell, this description is intended to mean "at least one selected from the group consisting of $\alpha$, $\beta$, and $\gamma$". Certain elements may be extracted from the first to third battery configurations and optionally combined together.

For example, the present embodiment may be incorporated into the first to third battery configurations. For example, the present embodiment may be combined with the first to third battery configurations. For example, the present embodiment may replace part of the first to third battery configurations. For example, the negative electrode of the first battery configuration may be replaced by the negative electrode according to the present embodiment. For example, the negative electrode of the first battery configuration may be used in combination with the negative electrode according to the present embodiment. For example, combining the first to third battery configurations with the present embodiment may improve battery performance.

[Examples]

In the following, the present embodiment will be described with reference to Examples, but the present embodiment is not limited to these Examples.

<No. 1>

(Negative Electrode)

A Cu foil (thickness, 10 $\mu$m) as a negative electrode current collector, graphite as a negative electrode active material, CNTs as a conductive material, SBR as a binder, CMC as a thickener, and deionized water as a dispersion medium were prepared. The negative electrode active material, the conductive material, the binder, the thickener, and the dispersion medium were mixed to prepare a negative electrode slurry. The mixing ratio (mass ratio) of the negative electrode active material, the conductive material, the binder, and the thickener was 97.9:0.1:1.5:0.5. The negative electrode slurry was applied to the surface of the negative electrode current collector with the use of a die coater, followed by drying, and thereby, a negative electrode active material layer (coating weight, 25 mg/cm$^2$) was formed. The resulting negative electrode active material layer was subjected to linear compression at a pressure of 0.3 kN/cm to produce a negative electrode. Also in each of No. 2 to No. 17 described below, the same materials were used to produce a negative electrode, and the same coating weight was achieved.

(Positive Electrode)

An Al foil (thickness, 15 $\mu$m) as a positive electrode current collector, Li(Ni$_{1/3}$Co$_{1/3}$Mn$_{1/3}$)O$_2$ as a positive electrode active material, CNTs as a conductive material, PVdF as a binder, and NMP as a dispersion medium were prepared. The positive electrode active material, the conductive material, the binder, and the dispersion medium were mixed to prepare a positive electrode slurry. The mixing ratio (mass ratio) of the positive electrode active material, the conductive material, and the binder was 98.9:0.1:1.0. The positive electrode slurry was applied to the surface of the positive electrode current collector, followed by drying, and thereby, a positive electrode active material layer was formed. The resulting positive electrode active material layer was compressed to produce a positive electrode.

(Separator)

As a separator, a resin film (thickness, 15 $\mu$m) was prepared. The resin film had a three-layer structure ((PP layer)/(PE layer)/(PP layer)).

(Electrolyte Solution)

EC, DMC, and EMC were mixed to prepare a mixed solvent. The mixing ratio (volume ratio) of EC, DMC, and EMC was 3:3:4. LiPF$_6$ (1.1 mol/L) was dissolved in the solvent to prepare an electrolyte solution.

(Non-Aqueous Electrolyte Secondary Battery)

The positive electrode, the separator, and the negative electrode were stacked in this order to form a power generation element. To the resulting power generation element, an external terminal was attached. As a case, a pouch made of laminated film was prepared. Into the case, the power generation element was placed. Into the case, the electrolyte solution was injected. After the electrolyte solution was injected, the case was sealed. In this manner, a non-aqueous electrolyte secondary battery (a test battery) of No. 1 was produced. Also in each of No. 2 to No. 17 described below, the same positive electrode, the same separator, and the same electrolyte solution were used to produce a test battery having the same capacity.

<No. 2>

(Negative Electrode)

In No. 2, the negative electrode slurry was applied to the negative electrode current collector by screen application. A mesh was placed on the negative electrode current collector, subsequently the negative electrode slurry was supplied to the mesh, and thereby the negative electrode slurry was transferred to the surface of the negative electrode current collector. After transfer, the mesh was removed. After the drying step, in the same manner as in No. 1, a negative electrode and a test battery were produced.

<Nos. 3, 5, 7, 9>

Negative electrodes and test batteries were produced in the same manner as in No. 1 except that the linear pressure applied at the time of compression of the negative electrode active material layer was changed. The linear pressure was 0.6 kN/cm in No. 3, 1.0 kN/cm in No. 5, 1.5 kN/cm in No. 7, and 2.0 kN/cm in No. 9.

<Nos. 4, 6, 8, 10>

Negative electrodes and test batteries were produced in the same manner as in No. 2 except that the linear pressure applied at the time of compression of the negative electrode active material layer was changed. The linear pressure was 0.6 kN/cm in No. 4, 1.0 kN/cm in No. 6, 1.5 kN/cm in No. 8, and 2.0 kN/cm in No. 10.

<Nos. 11 to 14>

Negative electrodes and test batteries were produced in the same manner as in No. 8 except that the mesh used at the time of application of the negative electrode slurry to the negative electrode current collector was changed.

<No. 15>

In No. 15, the negative electrode slurry was applied to the negative electrode current collector by gravure coating. The gravure cylinder for use was designed so as to achieve a shortest distance between the plurality of the second regions of 35 $\mu$m. As the gravure cylinder was rotated, the negative electrode current collector became sandwiched between the pressure-bonding roller and the gravure cylinder and pressure-bonded, and thereby the negative electrode slurry was transferred to the surface of the negative electrode current collector. After the drying step, in the same manner as in No. 1, a negative electrode and a test battery were produced.

<Nos. 16 to 17>

Negative electrodes and test batteries were produced in the same manner as in No. 15 except that the gravure cylinder was changed. The gravure cylinder for use was designed so as to achieve a shortest distance between the plurality of the second regions of 50 $\mu$m in No. 16 and 80 $\mu$m in No. 17.

(Evaluation)

At 25°C, CC charging (upper limit voltage, 4.0 V) was carried out. The design capacity of the test battery was 3000 mAh. The hour rate during the CC charging was 1 C. At an hour rate of 1 C, the design capacity is discharged in 1 hour.

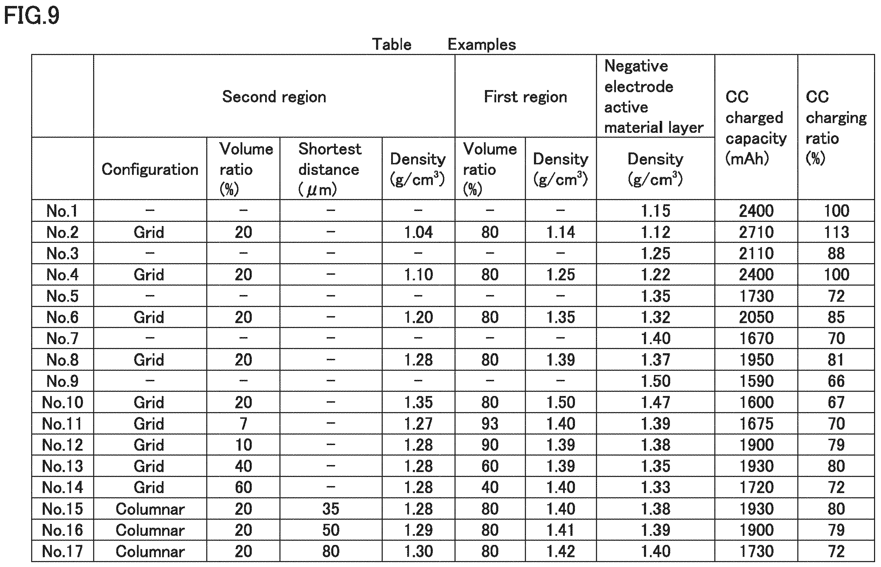

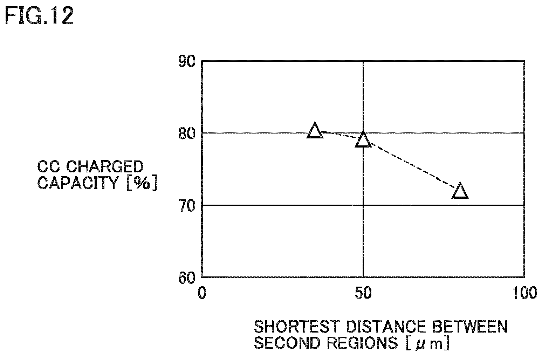

CC charged capacity (mAh) and CC charging ratio (%) after charging were calculated. Results are shown in Figs. 9 to 12. In the present example, comparison was made between test batteries that had the density of the negative electrode active material layer being close to each other. The CC charging ratio in the present example refers to a relative value to a CC charged capacity of 2400 mAh which is defined as 100%.

(Results)

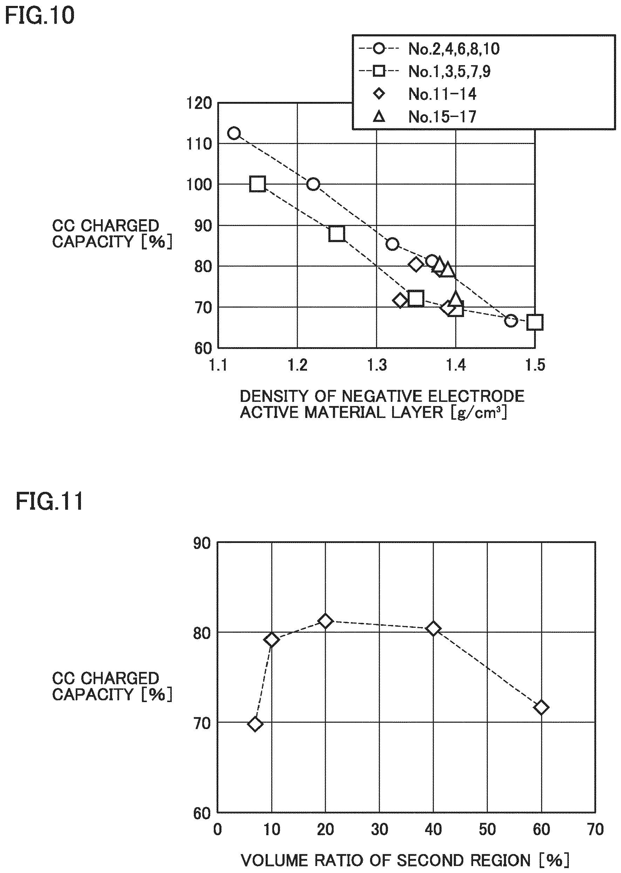

Referring to Figs. 9 and 10, comparison was made between No. 1 and No. 2, between No. 3 and No. 4, between No. 5 and No. 6, between No. 7 and No. 8, and between No. 9 and No. 10, and, as a result, the CC charging ratios of Nos. 2, 4, 6, 8, and 10 were higher than those of Nos. 1, 3, 5, 7, and 9. It may be because the presence of a second region at part of the negative electrode resulted in longer ion-diffusion pathways.

Referring to Figs. 9 to 11, comparison was made between Nos. 8 and 11 to 14 which were produced under the same conditions except that the volume ratio of the second region to the negative electrode active material layer was changed, and, as a result, the CC charging ratio was high when the volume ratio of the second region was from 10 to 40%. It may be because ions tend not to be diffused easily when the volume ratio of the second region is less than 10%, and also because the amount of negative electrode active material not used during high-load charging is increased when the volume ratio of the second region is more than 40%.

Referring to Figs. 9, 10, and 12, comparison was made between the test batteries of Nos. 15 to 17 which were produced under the same conditions except that the shortest distance between the plurality of the second regions was changed, and, as a result, the CC charging ratio was high when the shortest distance between the plurality of the second regions was 50 $\mu$m or less. It may be because movement of ions between the second regions are inhibited when the shortest distance between the plurality of the second regions is more than 50 $\mu$m.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

**Claims**

1. A negative electrode (10) comprising:

   a negative electrode current collector (11); and
   a negative electrode active material layer (12) including a negative electrode active material, wherein

the negative electrode active material layer (12) includes a first region (13) and a second region (14),
a density of the second region (14) is at least 7% less than a density of the first region (13), and
a volume ratio of the second region (14) to the negative electrode active material layer (12) is more than 7% and not more than 50%.

2. The negative electrode (10) according to claim 1, wherein the second region (14) is in grid form.

3. The negative electrode (10) according to claim 1, wherein

the negative electrode active material layer (12) includes a plurality of the second regions (14),
the second regions (14) are columnar, and
a shortest distance between the plurality of the second regions (14) is 50 $\mu$m or less.

4. The negative electrode (10) according to any one of claims 1 to 3, wherein a coating weight of the negative electrode active material layer (12) is 20 mg/cm$^2$ or more.

5. A non-aqueous electrolyte secondary battery (100) comprising the negative electrode (10) according to any one of claims 1 to 4.

FIG.1

FIG.2

FIG.3

FIG.4

FIG.5

# FIG.6

Table    First battery configuration

| | | | |
|---|---|---|---|
| Exterior package | | | Pouch (laminated film)<br>Prismatic case (made of metal)<br>Cylindrical case (made of metal) |
| Power generation element | | | Stack-type, wound-type |
| Positive electrode | Positive electrode active material | | $LiCoO_2$<br>$LiNi_{0.6}Co_{0.2}Mn_{0.2}O_2$<br>$LiNi_{0.7}Co_{0.1}Mn_{0.2}O_2$<br>$LiNi_{0.8}Co_{0.1}Mn_{0.1}O_2$ |
| | Particle shape | | Solid particles, hollow particles |
| | Dopant | Constituent element | Mg, Zr, W, Al, Ti, Co |
| | Covering layer | Constituent element | B, Al, Ti, Co, W, F |
| Negative electrode | Negative electrode active material | | Natural graphite, artificial graphite<br>SiO (dopant, Mg) |
| | Multi-component system Mixing ratio (mass ratio) | | Graphite/SiO=9/1 to 8/2 (mass ratio)<br>Graphite/SiO=9/1 to 7/3 (mass ratio)<br>Graphite/SiO=9/1 to 6/4 (mass ratio)<br>Graphite/SiO=9/1 to 1/9 (mass ratio) |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite |
| Electrolyte (Electrolyte solution) | Solute | | $LiPF_6$, LiFSI |
| | Solvent (volume ratio) | | EC/EMC/DEC=3/7-x/x   $(0 \leq x \leq 7)$<br>EC/EMC/DMC=3/7-x/x   $(0 \leq x \leq 7)$<br>EC/PC/EMC/DEC=3/2/(4-x)/x   $(0 \leq x \leq 4)$<br>EC/PC/EMC/DMC=3/2/(4-x)/x   $(0 \leq x \leq 4)$ |
| | Additive | | FB, FEC, VC |

# FIG.7

Table   Second battery configuration

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode | Positive electrode active material | | $LiNi_{1/3}Co_{1/3}Mn_{1/3}O_2$<br>$LiNi_{0.5}Co_{0.2}Mn_{0.3}O_2$<br>$LiNi_{0.6}Co_{0.2}Mn_{0.2}O_2$<br>$LiNi_{0.8}Co_{0.1}Mn_{0.1}O_2$<br>$LiNi_xM_{1-x}O_2$ ($0.6 \leq x < 1$, M=Co, Mn)<br>$LiNi_xM_{1-x}O_2$ ($0.6 \leq x < 1$, M=Co, Al)<br>$LiNi_xM_{1-x}O_2$ ($0.6 \leq x < 1$, M=Co+Mn+Al) |
| | Particle shape | | Solid particles, hollow particles |
| | Dopant | Constituent element | Not limited |
| | Covering layer | Constituent element | Not limited |
| Negative electrode | Negative electrode active material | | Graphite<br>$Al_2O_3$-Coated graphite<br>Si-C Composite material |
| | Multi-component system Mixing ratio (mass ratio) | | Graphite/(Si-C Composite material)=9/1 to 1/9<br>Graphite/(Si-C Composite material)=9/1 to 5/5 |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite |
| Electrolyte (Electrolyte solution) | Solute | | $LiPF_6$, $LiBF_4$ |
| | Solvent (volume ratio) | | EC/EMC=3/7<br>EC/DMC=3/7<br>EC/FEC/DEC=1/2/7 |
| | Additive | | Not limited |

# FIG.8

Table　　Third battery configuration

| | | | |
|---|---|---|---|
| Exterior package | | | Pouch (laminated film) Prismatic case (made of metal) Cylindrical case (made of metal) |
| Power generation element | | | Stack-type, wound-type |
| Positive electrode | Positive electrode active material | | $LiNi_xM_{1-x}O_2$ (0.3≤x<0.6, M=Co, Mn) $LiNi_xM_{1-x}O_2$ (0.6≤x<1, M=Co, Mn) $LiNi_xM_{1-x}O_2$ (0.6≤x<1, M=Co, Al) $LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material (natural graphite, artificial graphite), Alloy-based active material (Si,SiO), Li metal |
| Separator | Resin film | | PE layer (monolayer structure) PP layer/PE layer/PP layer (three-layer structure) |
| | Inorganic particle layer | Position | Both sides One side (facing positive electrode) One side (facing negative electrode) |
| | | Heat-resistant material | Alumina, boehmite, titania, magnesia |
| Electrolyte (Electrolyte solution) | Solute | | $LiPF_6$, $LiBF_4$, LiFSI, LiBOB[1], $LiPO_2F_2$, $FSO_3Li$, LiI, LiBr |
| | Solvent (volume ratio) | | EC/DMC/EMC (not limited in mixing ratio) EC/FEC/DMC/EMC (not limited in mixing ratio)[2] PC, DOX |
| | Additive | | FB, MA, VC, $CH_3OH$ |
| | Note | | 1) When the negative electrode active material includes Li metal, the solute may include LiBOB. 2) When the negative electrode active material includes an alloy-based active material and Li metal, the solvent may include FEC. |

# FIG.9

Table    Examples

| | | Second region | | | First region | | Negative electrode active material layer | CC charged capacity (mAh) | CC charging ratio (%) |
|---|---|---|---|---|---|---|---|---|---|
| | Configuration | Volume ratio (%) | Shortest distance ($\mu$m) | Density (g/cm$^3$) | Volume ratio (%) | Density (g/cm$^3$) | Density (g/cm$^3$) | | |
| No.1 | − | − | − | − | − | − | 1.15 | 2400 | 100 |
| No.2 | Grid | 20 | − | 1.04 | 80 | 1.14 | 1.12 | 2710 | 113 |
| No.3 | − | − | − | − | − | − | 1.25 | 2110 | 88 |
| No.4 | Grid | 20 | − | 1.10 | 80 | 1.25 | 1.22 | 2400 | 100 |
| No.5 | − | − | − | − | − | − | 1.35 | 1730 | 72 |
| No.6 | Grid | 20 | − | 1.20 | 80 | 1.35 | 1.32 | 2050 | 85 |
| No.7 | − | − | − | − | − | − | 1.40 | 1670 | 70 |
| No.8 | Grid | 20 | − | 1.28 | 80 | 1.39 | 1.37 | 1950 | 81 |
| No.9 | − | − | − | − | − | − | 1.50 | 1590 | 66 |
| No.10 | Grid | 20 | − | 1.35 | 80 | 1.50 | 1.47 | 1600 | 67 |
| No.11 | Grid | 7 | − | 1.27 | 93 | 1.40 | 1.39 | 1675 | 70 |
| No.12 | Grid | 10 | − | 1.28 | 90 | 1.39 | 1.38 | 1900 | 79 |
| No.13 | Grid | 40 | − | 1.28 | 60 | 1.39 | 1.35 | 1930 | 80 |
| No.14 | Grid | 60 | − | 1.28 | 40 | 1.40 | 1.33 | 1720 | 72 |
| No.15 | Columnar | 20 | 35 | 1.28 | 80 | 1.40 | 1.38 | 1930 | 80 |
| No.16 | Columnar | 20 | 50 | 1.29 | 80 | 1.41 | 1.39 | 1900 | 79 |
| No.17 | Columnar | 20 | 80 | 1.30 | 80 | 1.42 | 1.40 | 1730 | 72 |

EP 4 428 939 A1

## FIG.10

Legend:
- --○-- No.2,4,6,8,10
- --□-- No.1,3,5,7,9
- ◇ No.11−14
- △ No.15−17

Y-axis: CC CHARGED CAPACITY [%]

X-axis: DENSITY OF NEGATIVE ELECTRODE ACTIVE MATERIAL LAYER [g/cm³]

## FIG.11

Y-axis: CC CHARGED CAPACITY [%]

X-axis: VOLUME RATIO OF SECOND REGION [%]

FIG.12

CC CHARGED CAPACITY [%]

SHORTEST DISTANCE BETWEEN
SECOND REGIONS [$\mu$m]

Europäisches
Patentamt

European
Patent Office

Office européen
des brevets

## EUROPEAN SEARCH REPORT

**Application Number**

EP 24 15 8899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 215 600 510 U (CONTEMPORARY AMPEREX TECHNOLOGY CO LTD) 21 January 2022 (2022-01-21) * abstract * * Utility model content * * figures 4-8 * * claims 1-14 * * Note to Experimental Example 1 * ----- | 1-5 | INV. H01M4/13 ADD. H01M4/02 |
| X | JP 2018 170113 A (TDK CORP) 1 November 2018 (2018-11-01) * abstract * * paragraphs [0011] - [0018]; tables 1-5 * * figures 1-3 * * claims 1-7 * ----- | 1-5 | |
| X | US 2019/198935 A1 (SASAKI TOMOYA [JP] ET AL) 27 June 2019 (2019-06-27) * abstract * * paragraphs [0045] - [0054] * * examples 1-8; table 1 * * Comparative Example 1 * * figures 2-4 * * claims 1-19 * ----- | 1-5 | |
| X | US 2017/125806 A1 (WANG NA [JP] ET AL) 4 May 2017 (2017-05-04) * abstract * * paragraphs [0021] - [0027], [0034] - [0041] * * claims 1-7 * * figures 1, 2 * ----- -/-- | 1-5 | |

**TECHNICAL FIELDS SEARCHED (IPC)**

H01M

The present search report has been drawn up for all claims

| Place of search | Date of completion of the search | Examiner |
|---|---|---|
| Munich | 11 July 2024 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 15 8899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 300 652 A (INTERNATIONAL HELD STOCK LTD COMPANY IN CHINA) 8 April 2022 (2022-04-08) * abstract * * 2. Preparation of negative pole piece * * Summary of the invention * * claims 1-11 * ----- | 1-5 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| Munich | 11 July 2024 | Stachowiak, Olaf |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

page 2 of 2

## ANNEX TO THE EUROPEAN SEARCH REPORT
## ON EUROPEAN PATENT APPLICATION NO.

EP 24 15 8899

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | | Publication date | Patent family member(s) | | Publication date |
|---|---|---|---|---|---|
| CN 215600510 | U | 21-01-2022 | NONE | | |
| JP 2018170113 | A | 01-11-2018 | NONE | | |
| US 2019198935 | A1 | 27-06-2019 | CN | 109565033 A | 02-04-2019 |
| | | | JP | WO2018042842 A1 | 14-03-2019 |
| | | | US | 2019198935 A1 | 27-06-2019 |
| | | | WO | 2018042842 A1 | 08-03-2018 |
| US 2017125806 | A1 | 04-05-2017 | CN | 106797020 A | 31-05-2017 |
| | | | JP | 6644692 B2 | 12-02-2020 |
| | | | JP | WO2016035289 A1 | 15-06-2017 |
| | | | US | 2017125806 A1 | 04-05-2017 |
| | | | WO | 2016035289 A1 | 10-03-2016 |
| CN 114300652 | A | 08-04-2022 | NONE | | |

EPO FORM P0459

For more details about this annex : see Official Journal of the European Patent Office, No. 12/82

**EP 4 428 939 A1**

**Patent documents cited in the description**

- JP 2023034561 A
- JP 2022027413 A